# EUROPEAN PATENT APPLICATION

(11) **EP 2 096 839 A1**
(43) Date of publication of application: **02.09.2009**
(21) Application number: 07828209.2
(22) Date of filing: 10.09.2007
(51) Int. Cl.: H04L 29/14, H04L 1/00, H04N 17/04

(54) **METHOD AND DEVICE FOR MEASURING BIT ERROR RATE OF TUNER**

(30) Priority: 21.12.2006 JP 2006343760
(71) Applicant: Leader Electronics Corp., Yokohama-shi, Kanagawa 223-8505 (JP)
(72) Inventor: KOBAYASHI, Kazumi, Yokohama-shi Kanagawa 223-8505 (JP); AKADA, Susumu, Yokohama-shi Kanagawa 223-8505 (JP)
(74) Representative: Blodig, Wolfgang
(86) International application number: PCT/JP2007/067566
(87) International publication number: WO 2008/075485

(57) **Abstract**

A test signal generator 2 comprises a Pseudo Random Binary bit Sequence generator 20 for generating a Pseudo Random Binary bit Sequence in the form of burst while holding the continuity of the code, and intermittently operates in a burst form in response to operation control signals from circuits 22, 24. During one burst duration, a string of Pseudo Random Binary bit Sequence is generated in a certain sequence, where the first codes in the Pseudo Random Binary bit String generated in this burst duration follows the last code of a Pseudo Random Binary bit String generated in the preceding burst duration.

## Description

### TECHNICAL FIELD

The present invention relates to the field of generation of a test signal suitable to bit error rate measurements of tuners for digital broadcasting standard, Digital Video Broadcasting for Handhelds (DVB-H) and other tuners, and bit error rate measurements using the test signal.

### BACKGROUND ART

Conventionally, a bit error rate (BER) of a digital broadcasting tuner has been measured by converting a Pseudo Random Binary bit Sequence (PRBS) to a transport stream (TS) form to generate a test signal, applying this test signal to a digital broadcasting tuner under measurement, and subsequently determining bit errors in the test signal output from the tuner (Patent Document 1). The bit error in the test signal output from the tuner is detected by extracting received PRBS contained in TS received by the tuner, generating reference PRBS in synchronism with the extracted received PRBS, and compares the received PRBS with reference PRBS.

Recently, a tuner has emerged in conformity to DVB-H which is a new standard for digital broadcasting. In the digital broadcasting standard DVB-H, a broadcasting signal is divided by time slicing into burst periods called DELTA-T which are further sub-divided into a plurality of burst durations, one of which is assigned to a particular program. Therefore, a signal of a particular signal is transmitted during one particular burst duration included in each burst period, and hence takes the form of bursty transport stream (TS).
Patent Document 1: JP-18-186521-A

### DISCLOSURE OF THE INVENTION

### PROBLEMS TO BE SOLVED BY THE INVENTION

When the aforementioned prior art is used to measure a bit error rate of a DVB-H broadcasting tuner, where a test signal is generated using continuously generated PRBS's in a burst form, i.e., using a portion of a certain time length at certain intervals, received PRBS output from the DVB-H broadcasting tuner presents a discontinuous PRBS code, thus making it impossible to generate synchronized reference PRBS as mentioned above, which is relied on for comparison within a BER measurement apparatus.

Accordingly, it is an object of the present invention to provide a method and apparatus for generating a test signal suitable for bit error rate (BER) measurements of a tuner for the digital broadcasting standard DVB-H.

It is another object of the present invention to provide a method and apparatus for measuring a bit error rate using the test signal.

### MEANS FOR SOLVING THE PROBLEM

A test signal generator according to one aspect of the present invention generates a Pseudo Random Binary bit Sequence in a burst form while holding the continuity of the code.

According to another aspect of the present invention, the test signal generator may comprise an IP packet forming circuit for receiving the pseudo random bit string of the Pseudo Random Binary bit Sequence generator to generate an Internet Protocol (IP) packet, and a TS frame forming circuit for receiving the IP packet from the IP packet forming circuit to generate a transport stream (TS frame), and a processing circuit for performing one of modulation and noise addition on the TS frame.

According to a further aspect of the present invention, the test signal generator may comprise the IP packet forming circuit, the MPE section forming circuit, and the TS packet forming circuit, wherein each of the IP packet forming circuit, the MPE section forming circuit, and the TS packet forming circuit comprises a control signal generator circuit associated therewith, wherein the each control signal generator circuit generates the operation control signal indicative of an enabled state in a duration in which the associated circuit does not generates a header to be added, and the operation control signal indicative of a disabled state in the remaining duration, and the Pseudo Random Binary bit Sequence generator operates in response to these signals.

According to a further aspect of the present invention the test signal generator may comprise a burst forming circuit, wherein the burst forming circuit comprises a control signal generator circuit for generating the operation control signal indicative of an enabled state in a duration in which the burst forming circuit does not generate the additional packet to be added, and the operation control signal indicative of a disabled state in the remaining duration, and the Pseudo Random Binary bit Sequence generator operates in response to this signal.

According to another aspect of the present invention, a bit error rate measuring apparatus may comprise the test signal generator for generating a test signal including a TS frame, which is supplied to the tuner under measurement, and a bit error rate detector for detecting a bit error rate from a received test signal, the received test signal being generated by the tuner in response to the test signal from the test signal generator. Further, the bit error rate detector may comprise an IP packet extractor for extracting a received IP packet from the received test signal, a reference IP packet generator for generating a reference IP packet, and an error detector for comparing the received IP packet with the reference IP packet to detect an error. According to another aspect of the present invention, a test signal generating method is characterized by generating a test signal by generating a Pseudo Random Binary bit Sequence in the form of burst while holding the continuity of the code, and intermittently operates in a burst form in response to an operation control signal. Then, the method is characterized by generating a string of Pseudo Random Binary bit Sequence in a sequence in which the Pseudo Random Binary bit Sequence are generated during the burst duration, wherein the first code of the Pseudo Random Binary bit String generated in the burst duration is a code subsequent to the last code of a Pseudo Random Binary bit String generated during the preceding burst duration.

According to a further aspect of the present invention, the test signal generating method is characterized by receiving the Pseudo Random Binary bit String to generate an IP packet, and receiving the IP packet to generate a TS frame.

According to another aspect of the present invention, in the bit error rate measuring method, the test signal generating method generates a test signal including a TS frame, which is supplied to the tuner under measurement. The measuring method is characterized by including detecting a bit error rate from a received test signal, wherein the received test signal is generated by the tuner in response to the test signal from the test signal generator.

### EFFECTS OF THE INVENTION

For example, as with a DVB-H broadcasting tuner, even a broadcasting tuner sends signals on a certain particular channel in a burst form, the bit error rate (BER) can be measured for such a tuner.

The other objects and effects of the present invention will become apparent from the following detailed description of embodiments.

### BRIEF DESCRIPTION OF THE INVENTION

[Fig. 1]

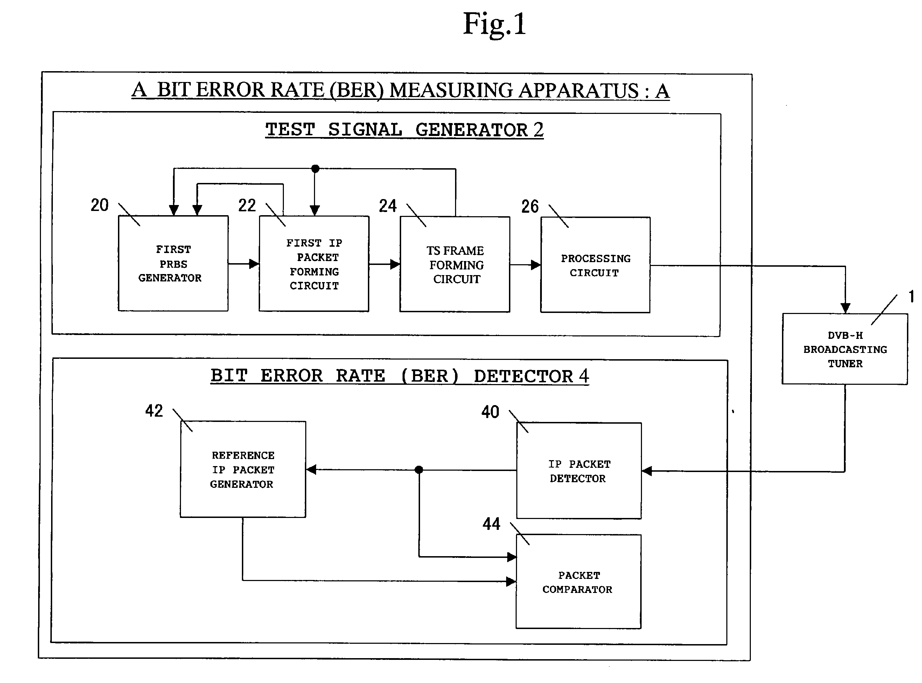

   Fig. 1 is a block diagram showing a bit error rate (BER) measuring apparatus according to a first embodiment of the present invention.
[Fig. 2]

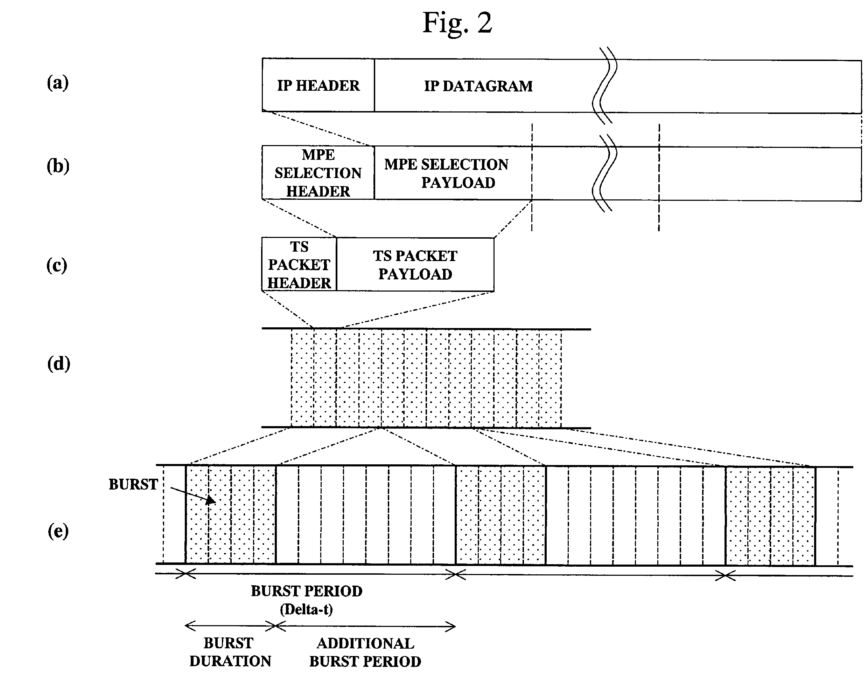

   Fig. 2 is a diagram showing the structures of (a) an IP packet, (b) an MPE section, (c) a TS packet (188 Bytes), (d) an MPEG-2 TS stream, and (e) a TS (transport stream) frame in a burst form used in the DVB-H standard in relation to one another.
[Fig. 3]

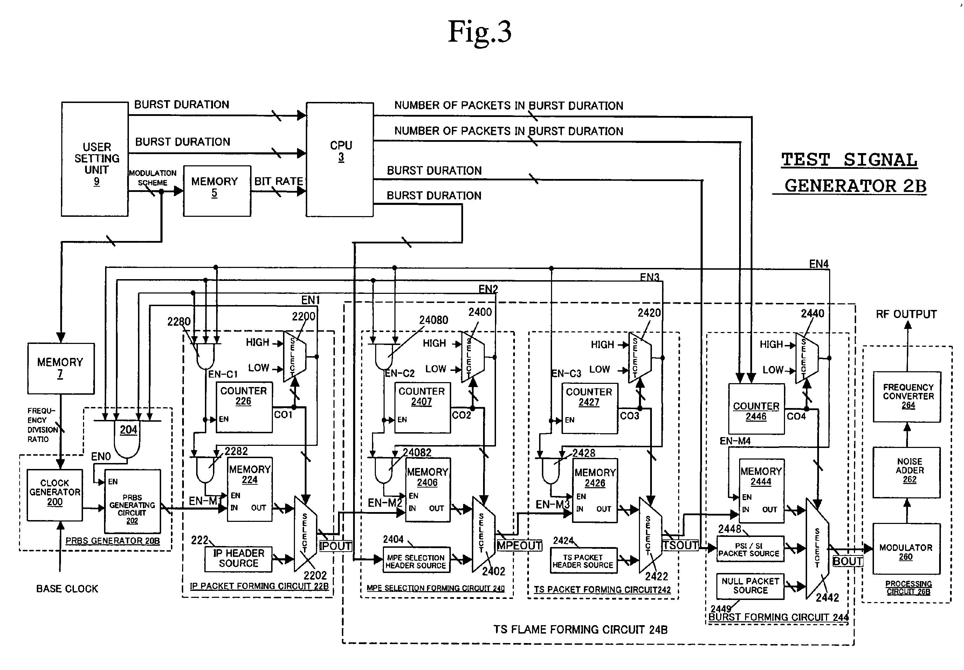

   Fig. 3 is a block diagram showing a test signal generator which more specifically embodies the test signal generator 2B in Fig. 1 in accordance with one embodiment.
[Fig. 4]

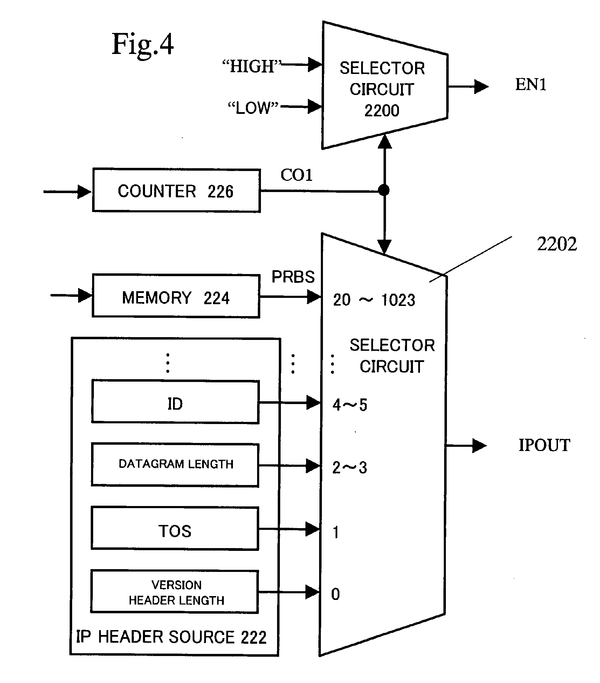

   Fig. 4 is a diagram showing in greater details a counter 226, selector circuits 2200, 2202, and an IP header source 222 in an IP packet forming circuit shown in Fig. 3.
[Fig. 5]

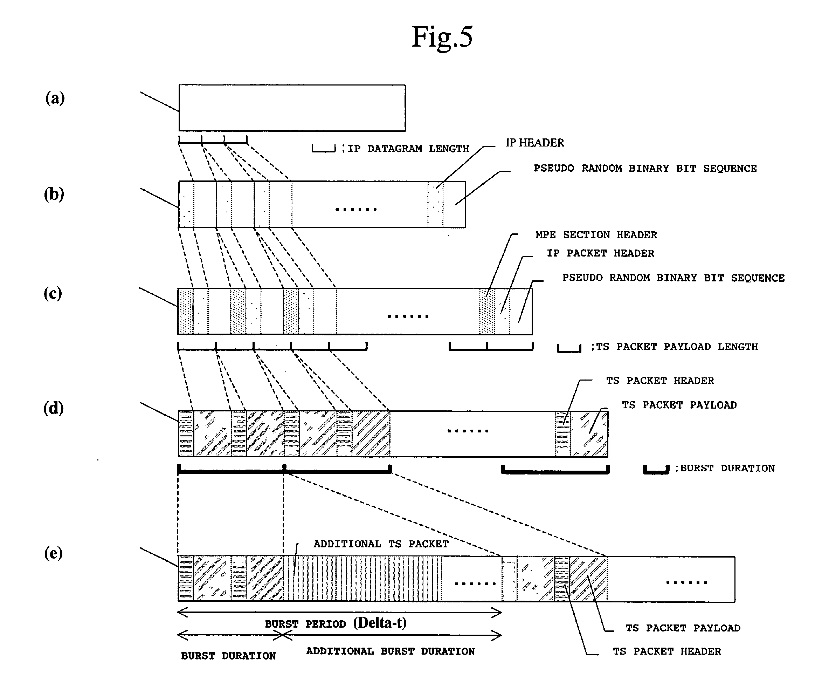

   Fig. 5 is a diagram showing the relationship between the data structure of each data generated in main circuits of the test signal generator in Fig. 3 and other data structures, where (a) represents a Pseudo Random Binary bit Sequence output; (b) an IP packet output; (c) an MPE selection output; (d) a TS packet output (MPEG2 TS frame); and (e) a TS frame output in bust form.
[Fig. 6A]

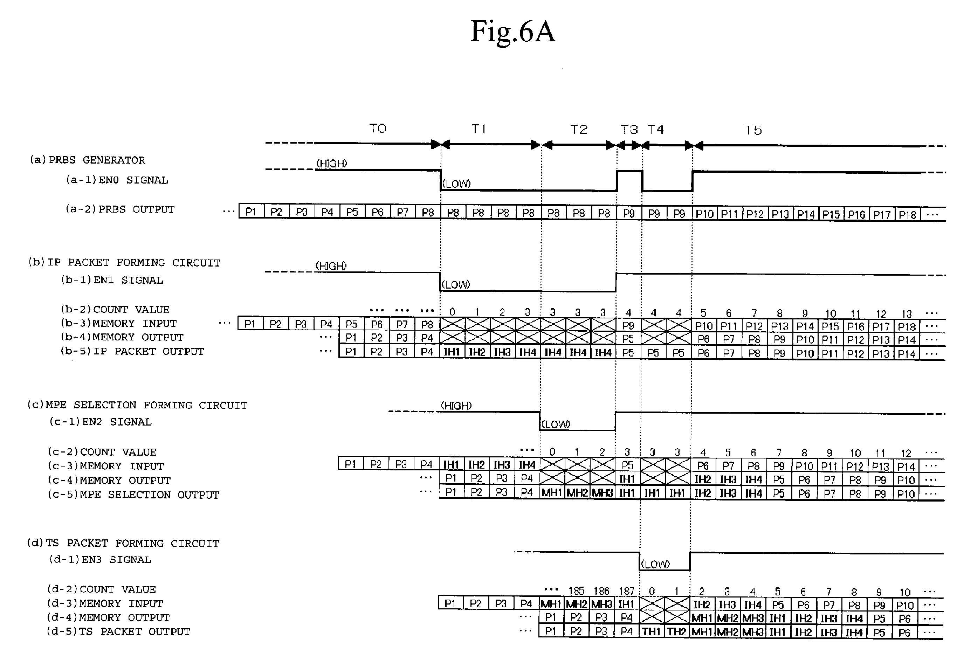

   Fig. 6A is a timing diagram showing signals and the like generated by part of the main circuits of the test signal generator in Fig. 3. In the diagram, (a) represents timings of signals and the like of a PRBS generator, where (a-1) represents an EN0 signal; and (a-2) a PRBS output. (b) represents timings of signals and the like of an IP packet forming circuit, where (b-1) represents an EN1 signal; (b-2) a count value; (b-3) a memory input; (b-4) a memory output; and (b-5) an IP packet output. (c) represents timings of signals and the like of an MPE selector circuit, where (c-1) represents an EN2 signal; (c-2) a count value; (c-3) a memory input; (c-4) a memory output; and (c-5) an MPE selection output. (d) represents timings of signals and the like of the TS packet forming circuit, where (d-1) represents an EN3 signal; (d-2) a count value; (d-3) a memory input; (d-4) a TS memory output; and (d-5) a TS packet output.
[Fig. 6B]

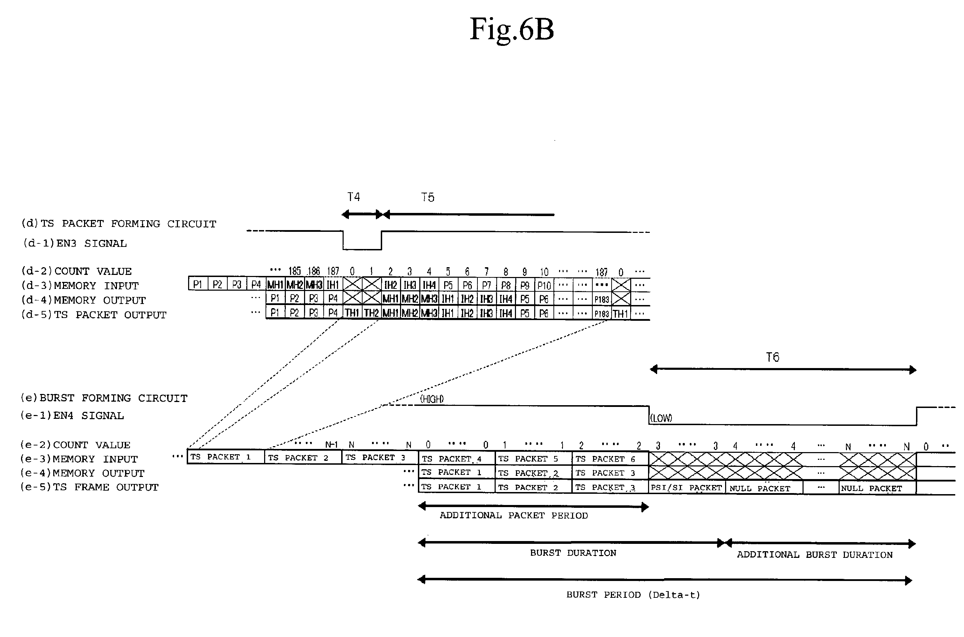

   Fig. 6B is a timing diagram showing signals and the like generated in the rest of the main circuits of the test signal generator shown in Fig. 3. In the diagram, (d) represents timings of signals and the like of the TS packet forming circuit, where (d-1) represents an EN3 signal; (d-2) a count value; (d-3) a memory input; (d-4) a TS memory output; and (d-5) a TS packet output. (e) represents timings of signals and the like of a burst forming circuit, where (e-1) represents an EN4 signal; (e-2) a count value; (e-3) a memory input; (e-4) a memory output; and (e-5) a TS frame output. In the diagram, N is the number of packets in one burst period minus one.
[Fig. 7]

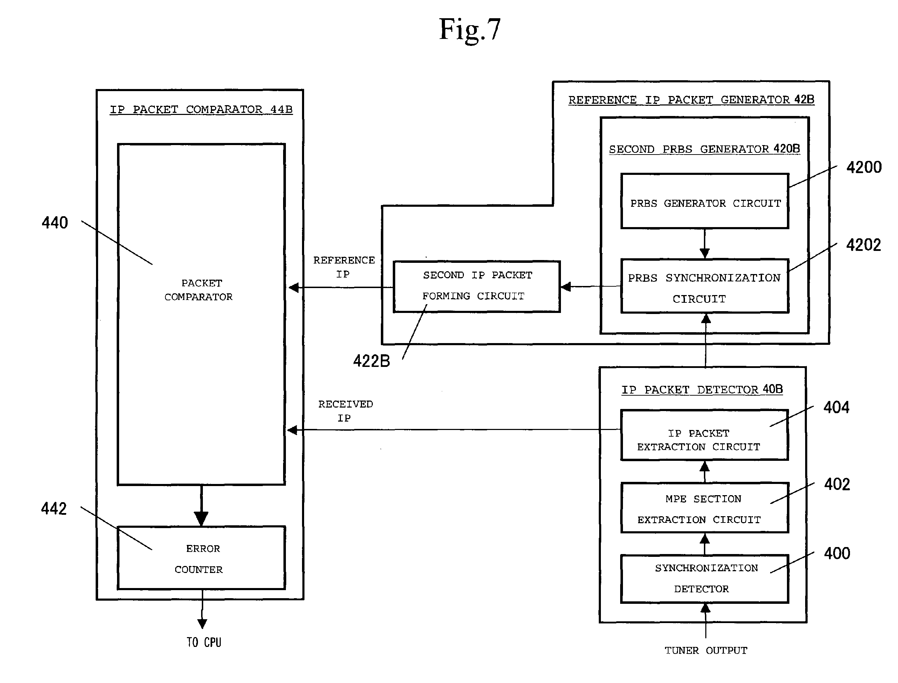

   Fig. 7 is a block diagram showing details of a bit error rate (BER) detector 4B shown in Fig. 1.

### BEST MODE FOR CARRYING OUT THE INVENTION

Next, an embodiment of the present invention will be described in detail with reference to the drawings.

Fig. 1 shows in a block diagram form a bit error rate (BER) measuring apparatus A according to a first embodiment of the present invention. As shown, this BER measuring apparatus A comprises a test signal generator 2 and a BER detector 4 for measuring BER of a DVB-H broadcasting tuner 1 which is one example under measurement. The test signal generator 2 comprises a first Pseudo Random Binary bit Sequence generator 20, an IP packet forming circuit 22, a TS frame forming circuit 24, and a processing circuit 26. The BER detector 4 in turn comprises an IP detector 40, a reference IP packet generator 42, and a packet comparator 44.

Specifically, the first Pseudo Random Binary bit Sequence generator 20, which is a circuit for generating PRBS, has an input for receiving operation control signals from the first packet forming circuit 22 and TS frame forming circuit 24, and becomes operative and inoperative in response to the control signals received at this input to intermittently operate, thereby generates, at its output, a Pseudo Random Binary bit Sequence (PRBS) which comprises continuous codes. The next first IP packet forming circuit 22 has an input for receiving the generated PRBS, and an input for receiving an operation control signal from the TS frame forming circuit 24. This circuit 22 operates in response to the operation control signal from the TS frame forming circuit 24 to generate an Internet Protocol (IP) packet which contains PRBS in a data part, and generate the result at one output thereof. The first packet forming circuit 22 also has another output for generating an operation control signal for generating the operation of the PRBS generator 20. The IP packet generated by the circuit 22 is coupled to an input of the TS frame forming circuit 24. The TS frame forming circuit 24 performs a data conversion into a form as defined in the DVB-H standard. Specifically, the TS frame forming circuit 24 converts an input IP packet into a multi-protocol encapsulation (MPE) section form, and further converts this MPE section into a transport stream (TS) packet form to generate a TS frame in an MPEG-2 TS form, and finally bursts the TS frame to generate the TS frame in burst form at its output. Also, the TS frame forming circuit 24 has an output for generating an operation control signal for controlling the operation of the first PRBS generator 20 in the same manner. The TS frame generated by the TS frame forming circuit 24 is coupled to an input of the processing circuit 26. Then, the processing circuit 26 generates a test signal by performing processing required for application to the DVB-H broadcasting tuner 1, for example, one or both of modulation and noise addition. The processing circuit 26 also performs a frequency conversion, if such processing is required for the application to the tuner. As the thus generated test signal is applied to the input of the DVB-H broadcasting tuner 1, the DVB-H broadcasting tuner 1 selects a certain channel, and outputs a signal received on this selected channel in an MPEG-2 TS frame form or an IP packet form.

In the BER detector 4 which has an input for receiving a received output from the DVB-H broadcasting tuner 1, the IP packet detector 40 receives the received output at its input, and then the IP packet detector 40 extracts and outputs an IP packet, i.e., a received IP packet from the received output. This extracted received IP packet output is supplied to an input of the reference IP packet generator 42. The reference IP packet generator 42 receives the received IP packet output, generates second PRBS which has the same data generation sequence as that generated within the first Pseudo Random Binary bit Sequence generator 20, synchronizes the newly generated PRBS to PRBS contained in the received IP packet, and generates an IP packet from this PRBS. The generated IP packet comprises a reference IP packet for use in determining bit errors in the received IP packet. The packet comparator 44 receives these received IP packet and reference IP packet, compares the received IP packet with the reference IP packet on a bit-by-bit basis, and outputs a bit error signal at its output when a discrepancy is detected.

Referring now to Fig. 2, the DVB-H standard will be described. The DVB-H standard defines an MPE section (Fig. 2(b)) for transmitting a datagram on a third layer (network layer) of an OSI reference model in a TS form. An MPE section header contains a "burst period (Delta-t)" which is required to receive TS frames in a burst form at a DVB-H broadcasting tuner. An MPE section payload in turn contains an IP packet (Fig. 2(a)). The MPE section is fragmented or coupled to adapt to a TS packet length (188 bytes) and incorporated into a TS packet payload to generate a TS packet (Fig. 2(c)). The TS packet contains a TS packet header and a TS packet payload, and the TS packet header contains a packet identifier (PID). An MPEG-2 TS frame (Fig. 2(d)) is comprised of one or more TS packet outputs.

In the DVB-H standard, this MPEG-2 TS frame is transformed into a burst type, and transmitted as a burst type TS frame (Fig. 2(e)) through time slicing. This burst type TS frame has a burst period, and one burst period includes at least one burst duration, and may also include at least one additional burst duration. Each burst duration includes a TS packet which has PID with a number corresponding to a channel transmitted in this duration, and each additional burst duration includes an additional TS packet having PID with a number corresponding to a channel transmitted in this duration in the same manner.

A DVB-H broadcasting tuner selects from among the TS frames and outputs only a burst which contains a packet identifier (PID) corresponding to one certain channel, i.e., this one channel. The tuner can generate this selected output in an MPEG-2 TS form or an IP packet form. While the rest of the DVB-H standard is omitted from the description because it does not directly relates to the present invention, details are defined in the MPEG-2 standard and DVB-H standard. In this regard, one embodiment related to data forms used in the present invention and the generation of TS frames will be described later with reference to a conceptual diagram of Fig. 5.

Referring next to Figs. 3, 5, 6A, and 6B, a description will be given of a test signal generator 2B which more specifically embodies the embodiment of Fig. 1 in accordance with one embodiment. In Fig. 3, elements corresponding to those in Fig. 1 are designated the same reference numerals with a symbol "B" appended thereto. Here, Fig. 5 is a diagram showing the relationship in data structure among a Pseudo Random Binary bit Sequence, an IP packet, an MPE section, a TS packet, and a burst type TS frame, and Figs. 6A and 6B are timing diagrams showing signals and the like in the circuit of Fig. 3.

As shown in Fig. 3, the test signal generator 2B comprises a first Pseudo Random Binary bit Sequence (PRBS) generator 20B, an IP packet forming circuit 22B, a TS frame forming circuit 24B, and a processing circuit 26B, corresponding to the test signal generator 2 shown in Fig. 1, and further comprises a central processing unit (CPU) 3, a memory 5, a memory 7, and a user setting unit 9. In this regard, the memory 5 and memory 7 may be in a tabular form, and the memory 5 may be in a directly processing from instead of holding data in the memory or table. The first Pseudo Random Binary bit Sequence generator 20B comprises a clock generator 200, a first PRBS generator circuit 202, and an AND circuit 204. The IP packet forming circuit 22B in turn comprises two selector circuits 2200 and 2202, two AND circuits 2280 and 2282, an IP header source 222, a memory 224, and a counter 226. The TS frame forming circuit 24B comprises an MPE section forming circuit 240, a TS packet forming circuit 242, and a burst forming circuit 244. Notably, the MPE section forming circuit 240, TS packet forming circuit 242, and burst forming circuit 244 are substantially the same as the IP packet forming circuit 22B in configuration. The processing circuit 26B comprises a modulator 260, a noise adder 262, and a frequency converter 264.

Specifically, in the user setting unit 9, the user sets a burst duration, a burst period (Delta-t), and a modulation scheme, and data indicative of each setting is output to a corresponding output. The memory 5 outputs data indicative of a bit rate (Bitrate) used in a modulation scheme from data indicative of the modulation scheme supplied from the user setting unit 9. Then, this data is supplied to the central processing unit (CPU) 3 which has an input connected to an output of the memory 5. The central processing unit (CPU) 3 calculates and outputs information required to generate burst type TS frames, using data indicative of a burst duration and a burst period supplied from the user setting unit 9, respectively, and data indicative of a bit rate received from the memory 5, i.e., the number of TS packets in the burst duration (indicative of the number of TS packets per burst duration), the number of TS packets in the burst period (indicative of the number of TS packets per burst period), the burst duration (see Fig. 5(d)), and the burst period (see Fig. 5(e)).

The memory 7 receives the data indicative of a modulation scheme from the user setting unit 9 in the same manner as the memory 5, and outputs a frequency division ratio for generating a clock for use in this modulation scheme. This frequency division ratio is supplied to the clock generator 200.

In the first Pseudo Random Binary bit Sequence generator 20B, the clock generator 200 has an input for receiving a frequency division ratio from the memory 7, comprises a frequency divider (not shown) for dividing an externally or internally generated base clock by the frequency division ratio, and generates a clock at a rate corresponding to the specified modulation scheme, which is supplied to the first PRBS generator circuit 202. The AND circuit 204 has four inputs for receiving operation control signals, i.e., enable signals EN1 (Fig. 6A(b)), EN2 (Fig. 6A(c)), EN3 (Fig. 6A(d)), EN4 (Fig. 6B(e)) from the IP packet forming circuit 22B, MPE section forming circuit 240, TS packet forming circuit 242, and burst forming circuit 244. Each of the enable signals represents disabled when it is low (LOW) and enabled when it is high (HIGH). This AND circuit has an output for generating an enable signal EN0 (Fig. 6A(a)). This enable signal EN0 goes to high only when all of the four enable signal inputs are high, and goes to low when even one is low. The first PRBS generator circuit 202 has an enable (EN) input for receiving the enable signal EN0, and a clock input for receiving the clock from the clock generator 200, and is enabled while EN0 remains high to generate a Pseudo Random Binary bit Sequence (PRBS) output (Fig. 6A(a)). In this regard, each of Pseudo Random Binary bit Sequence outputs generated by the PRBS generator circuit 202 is a parallel output having a length of one byte, and an overall Pseudo Random Binary bit Sequence generated during one high duration of the enable EN0 is called the Pseudo Random Binary bit string. On the other hand, when the enable signal EN0 goes to low (for example, at the end of a duration TO in Fig. 6A(a)), the PRBS generator circuit 202 is disabled and stops generating the Pseudo Random Binary bit Sequence, and holds the Pseudo Random Binary bit Sequence when it stops (for example "P8" in Fig. 6A(a)) as it is during a low period. Thus, when the enable signal EN0 goes from low to high, the PRBS circuit 202 resumes the generation from an immediately subsequent code (for example, "P9" in Fig. 6A(a)) for the last Pseudo Random Binary bit Sequence (for example, "P8" in Fig. 6A(a)) within a Pseudo Random Binary bit String generated during the preceding high duration. In other words, the Pseudo Random Binary bit Strings generated intermittently by the first PRBS generator circuit 202 are connected to one another to form a single continuously generated Pseudo Random Binary bit Sequence (P1-8, P9, P10-P18... in Fig. 6A(a)).

Describing next details of the IP packet forming circuit 22B, the AND circuit 2280 included in this circuit 22B has three inputs for receiving the enable signals EN2, EN3, EN4, respectively, from the MPE section forming circuit 240, TS packet forming circuit 242, and burst forming circuit 244, and performing AND processing of these, and generates the result at an output as a counter enable signal EN-C1. Thus, the counter enable signal EN-C1 goes to high only when all the enable signals EN2, EN3, EN4 are high, indicating that the counter 226 should perform a counting operation. The counter 226 in turn receives the counter enable signal EN-C1 at an enable input EN, comprises an input (not shown) for receiving the clock, and counts the clock only when it is enabled to generate its counter output CO1 at the output. The clock received by this counter is the clock output by the clock generator 200 of the PRBS generator 20B, and the counter 226 is preset to a count corresponding to the length of one IP packet. In this regard, the IP packet length is a value which can be arbitrarily set by the user. Thus, the counter 226 counts up one by one for each byte of an IP packet, and returns to zero when the IP packet length is reached. With the value of this counter output CO1, it is possible to identify the correspondence to one byte portion in a plurality of bytes contained in the IP packet. The output of the counter 226 is input to each control input of the selector circuits 2202 and 2200. The counter enable signal EN-C1 stops the counting operation of the counter while it is low, so that the counter holds the value of the counter output CO1 at the time the counter enable signal EN-C1 goes to low during a low duration.

Next, the selector circuit 2200 has two inputs for receiving "high" and "low," respectively, receives the counter output CO1 at a control input, and selects high or low depending on the output of the counter 226 to generate an enable signal EN1. Specifically, while the value of the counter output CO1 indicates a data portion of an IP packet (i.e., the counter output CO1 is equal to or larger than a certain value), the selector circuit 2200 selects high, causing the signal EN1 to go to high, thereby indicating a duration in which the PRBS generator 20B can operate. On the other hand, while the value of the counter output CO1 indicates an IP header portion (i.e., the counter output CO1 is smaller than the above-mentioned value), the selector circuit 2200 selects low, causing the signal EN1 to go to low, thereby indicating a duration in which the header of the IP packet should be output.

For example, as shown in Fig. 4, when the IP packet length is 1024 bytes and the header length is 20 bytes, the header portion or data portion can be identified by checking whether the value of the counter CO1 is less than 20 or equal to or more than 20. In this event, as a more specific exemplary implementation of the selector 220, in a manner similar to the selector 2202 in Fig. 4, 1024 inputs are provided, input 0 - input 19 are all connected to low, input 20 - input 1023 are connected to high, respectively, and an input of a corresponding number can be selected and output in accordance with the counter output CN1. Further, an output IPOUT of the selector circuit 2202 is supplied to the next TS frame forming circuit 24B.

Next, turning back to Fig. 3, the AND circuit 2282 has inputs connected to the output of the AND circuit 2280 and the output of the selector circuit 2200, respectively, and are supplied with the signal EN-C1 and signal EN1, respectively. This circuit 2282 performs AND processing of the signal EN-C1 and signal EN1 to generate and output a memory enable signal EN-M1 for controlling the operation of the memory 224. This memory enable signal EN-M1 goes to high only during a duration in which an IP packet can BE generated and in which a data portion, rather than the header, of the IP packet can be generated. The memory 224, which receives this memory enable signal EN-M1 at an enable input EN, also has an input (IN) for receiving the output of the PRBS generator circuit 202, and further has an output (OUT) for generating data from the memory. This memory 224 inputs and outputs data on a byte-by-byte basis in response to the base clock and signal EN-M1. Specifically, the memory 224 receives and stores Pseudo Random Binary bit Sequence generated by the PRBS generator circuit 202 one byte by one byte only when the signal EN-M1 is high, and simultaneously outputs one byte which has been previously stored. When the signal EN-M1 is low, the memory 224 is disabled and stops the memory operation. On the other hand, the IP header source 222 is in a known circuit configuration which comprises circuits for selectively output high or low on a bit-by-bit basis for a plurality of bits. This source simultaneously outputs data corresponding to the IP header on a byte-by-byte basis. In this regard, data in the IP header can be arbitrarily set by switching the output of the circuit for each bit high or low.

As shown in Fig. 4, when the IP packet length is 1024 bytes and the header length is 20 bytes, the IP header contains in bytes 0 - 19, information such as a version and a header length (byte 0), TOS (byte 1), a datagram length (bytes 2 - 3), ID (bytes 4 - 5), and the like.

Next, the selector circuit 2202 has one input connected to the output of the IP header source 222, another input connected to the output (OUT) of the memory 224, and a control input to receive the counter output CO1. In one embodiment, describing with the example shown in Fig. 4, where the IP packet length is 1024 bytes and the header length is 20 bytes, this selector circuit 2202 has 1024 byte inputs, where byte 0 input - 19 input are connected to the IP header source 222, and byte 20 input to byte 1023 input are connected to the memory outputs, respectively.

Accordingly, in this example, the selector circuit 2202 selects a selector input of a byte number indicated by the value of the counter output CO1 and generates the same at its output, and therefore sequentially outputs data in the IP header when the counter value is from 0 to 19, and sequentially outputs PRBS data which is a data portion of an IP packet when the counter output CO1 is from 20 to 1023, thus generating one IP packet as a whole (see Fig. 5(b) and Fig. 6A(b)). The output of this selector circuit 2202 is supplied to the next TS frame forming circuit 24B.

Describing next the MPE section forming circuit 240 shown in Fig. 3, this circuit adds an MPE section header to an IP packet generated by the IP packet forming circuit 22B to generate an MPE section (see Figs. 5(c) and 6A(c)). A circuit in a detailed embodiment of this circuit 240 comprises AND circuits 24080, 24082, a counter 2407, selector circuits 2400, 2402, a memory 2406, and an MPE section header source 2404. Since this circuit configuration is substantially similar to the IP packet forming circuit 22B, different aspects alone will be described. Inputs to the AND circuit 24080 corresponding to the AND circuit 2280 in the IP packet forming circuit 22B are two, the enable signal EN3 from the TS packet circuit 242, and the enable signal EN4 from the burst forming circuit, which are ANDed to generate a counter enable signal EN-C2 for the counter 2407. Also, the MPE section header source 2404 corresponds to the IP header source 222 in the IP packet forming circuit 22B, is configured by circuits similar to those of the source 222, and simultaneously outputs data corresponding to the MPE section header on a byte-by-byte basis. This MPE section header contains a burst duration supplied from the central processing unit (CPU) 3. Also, similar to the IP packet length, the MPE section length is a value which can be arbitrarily set by the user, and is preset in the counter 2407. Then, an output MPEOUT of the selector circuit 2402 is supplied to the next TS packet forming circuit 242.

Describing next the TS packet forming circuit 242 shown in Fig. 3, this circuit is a circuit for adding a TS packet header to an MPE section generated by the MPE section forming circuit 240B for conversion into a TS packet form (see Figs. 5(d) and 6A(d)). Circuits in a detailed embodiment of this circuit 242 comprise an AND circuit 2428, a counter 2427, selector circuits 2420, 2422, a memory 2426, and a TS packet header source 2424. Since this circuit configuration is substantially similar to the IP packet forming circuit 22B and MPE section forming circuit 240, different aspects alone will be described. The TS packet forming circuit 242 does not need an AND circuit corresponding to the AND circuit 2280 in the IP packet forming circuit 22B. This is because a counter enable signal EN-C3 in the TS packet forming circuit 242 is the same as the enable signal EN4 from the burst forming circuit 242. Also, the TS packet header source 2424 corresponds to the IP header source 222 in the IP packet forming circuit 22B, and is configured by circuit similar to the above to simultaneously output data corresponding to a TS packet header on a byte-by-byte basis. This TS packet header portion contains a packet identifier (PID), and this PID indicates that a TS packet is information on a certain particular channel, so that it must be set to a particular unique value. In this regard, since the TS packet length is fixed at 188 bytes, the counter 2427 is preset to this value. Then, an output TSOUT of the selector circuit 24222 is supplied to the next burst forming circuit 244.

Next, the burst forming circuit 244 shown in Fig. 3 adds a PSI/SI (Program Specific information) packet and a NULL packet, which are additional TS packets, to a TS packet generated by the TS packet forming circuit 242 to generate a burst type TS frame as shown in Fig. 5(e). Circuits in a detailed embodiment of this circuit 244 comprise a counter 2446, selector circuits 2440, 2442, a memory 2444, and a PSI/SI package source 2448 and a NULL packet source 2449. Since this circuit configuration is substantially similar to the IP packet forming circuit 22B, MPE section forming circuit 240, and TS packet forming circuit 242, different aspects alone will be described. The counter 2446 has two inputs for receiving data on the number of TS packets in a burst duration from the central processing unit (CPU) 3 and the number of TS packets in a burst period, respectively, is preset to the number of TS packets per burst period, counts up one by one for each TS packet, and generates its count output C04 at its output. Thus, this counter output C04 identifies a duration corresponding to one of a plurality of TS packets within a burst type TS frame. This counter output CO4 is used by the selector circuit 2440 to generate the enable signal EN4 for distinguishing a burst duration for PRBS insertion in which a TS packet from the TS packet forming circuit 242 is inserted, from additional burst durations (for example, distinguishing a duration corresponding to a duration of the number of packets equal to the number of packets in a burst duration from the starting time of the burst duration from subsequent additional burst durations). In the example shown in Fig. 5(e), the counter output C04 indicates an additional burst duration when the value of the counter output C04 is equal to or more than three, and indicates a burst duration in which a TS packet from the TS packet forming circuit 242 is inserted when it is less than three. Notably, this selector circuit 2440 can be similar in configuration to the aforementioned selector circuit 2200 and the like.

Next, the memory 2444 has an enable input for receiving an enable signal EN-M4 from the selector circuit 2440, and an input (IN) for receiving the output from the TS packet forming circuit 242. Here, the enable signal EN-M4 is the same as EN4. Then, similar to the aforementioned memory 2202, the memory 2444 performs data input/output on a byte-by-byte basis in response to the base clock and enable signal EN4. Specifically, the memory 2444 receives and stores the TS packet TSOUT one byte by one byte from the TS packet forming circuit 242, and simultaneously outputs previously stored TS packet one byte by one byte. When the signal EN4 is low, the memory operation is stopped.

Next, the PSI/SI packet source 2448 is in a circuit configuration for selectively output high or low on a bit-by-bit basis in a manner similar to the IP header source 222 and the like. This simultaneously generates data corresponding to a PSI/SI packet in a TS form on a byte-by-byte basis. In this regard, the foregoing PSI/SI packet contains a burst duration value input from the central processing unit (CPU) 3. The null (NULL) packet source 2449, which is in a circuit configuration similar to the PSI/SI packet source 2448, can selectively generate high or low on a bit-by-bit basis, simultaneously outputs each data corresponding to a Null packet in a TS form in units of bytes, and supplies the data to the selector circuit 2442 connected thereto. The selector circuit 2442 has an input for receiving a TS packet supplied from the memory 2444, an input for receiving a PSI/SI packet supplied from the PSI/SI packet source 2448, and an input for receiving a Null packet supplied from the null (Null) packet source 2449, selects a selector circuit input corresponding to the value at the output of the counter 2446 and outputs the same byte by byte at an output BOUT, in a manner similar to the aforementioned selector circuit 224 and the like. Specifically, the selector circuit 2442 outputs a TS packet from the memory 2444 when the counter value indicates a burst duration for TS packet insertion, for example, as shown in Fig. 6B, outputs a PSI/SI packet in a TS form from the PSI/SI packet source 2408 in the last TS packet portion of the same burst duration, and outputs a Null packet in a TS form in the remaining duration as an additional burst duration.

Describing next details of the processing circuit 26B in Fig. 3, the processing circuit 26B comprises a modulator 260, a noise adder 262, and a frequency converter 264. The processing circuit 26B performs processing on a burst form TS frame supplied from the burst forming circuit 244, required for application to the DVB-H broadcasting tuner 1, for example, one or both of modulation and noise addition. The processing circuit 26B also performs a frequency conversion, if such processing is required for the application to the DVB-H broadcasting tuner 1.

Referring now to Fig. 5, a description will be orderly given of the relationship in structure among data generated by the respective circuits 20B, 22B, 240, 242, and 244 in the test signal generator 2B shown in Fig. 3. It should be noted that Fig. 5 is not a timing diagram but is simply intended to show the respective data form to facilitate understanding of the correlation thereof.

A sequence of Pseudo Random Binary bit Sequence (Fig. 5(a)) generated by the Pseudo Random Binary bit Sequence generator 20B is fragmented into an IP datagram length by the IP packet forming circuit 22B, each incorporated into an IP packet together with an IP header as an IP data datagram, resulting in a IP packet output (Fig. 5(b)). The MPE section forming circuit 240 incorporate each of these IP packets into an MPE section together with an MPE section header as an MPE section payload to generate an MPE section output (Fig. 5(c)). In this regard, one MPE section contains one IP packet. Here, the MPE section header portion contains a burst period value (Delta-t) supplied from the CPU 3. The TS packet forming circuit 242 fragments the MPE section output by a TS packet length (fixed at 188 bytes) or couples the same to have the TS packet length, incorporates the resulting MPE section output into a payload portion of a TS packet, and incorporates a TS packet header having a packet identifier (PID) to generate a TS packet output (Fig. 5(d)). This TS packet output is in the form of MPEG-2 TS frame. The burst forming circuit 244 adds an additional burst duration in order to make the MPEG2-TS frame conform to the DVB-H standard, thereby generating a burst type TS frame (Fig. 5(e)). Notably, in the present invention, the burst formation processing described in Fig. 3 adds a Null packet in a TS frame form as an additional packet which is to be inserted in the additional burst duration, but the additional packet is not limited to the Null packet, but any packet can be used as well as long as it has a value different from a particular packet identifier (PID) assigned to a TS packet under bit error measurement.

Next, an exemplary overall operation of the test signal generator 2B shown in Fig. 3 will be described with reference to timing diagrams of Figs. 6A and 6B. For facilitating the description, assume herein that each of the memories 224, 2406, 2426, 2444 in Fig. 3 has a capacity of four bytes (however, the burst forming circuit has a capacity of three TS packets), and the IP header length, MPE header length, and TS frame header length are four bytes, three bytes, and two bytes, respectively. Assume also that a burst duration in a TS frame in the burst forming circuit is four TS packets. Also, here, in Fig. 6 "Pn" (n is an integer equal to or larger than on) indicates an n-th (i.e., at an n-th byte) Pseudo Random Binary bit Sequence (PRBS) within Pseudo Random Binary bit Sequence (PRBS) output from the PRBS generator circuit 202. "IHn" (n is an integer equal to or larger than one) indicates an n-th (i.e., at an n-th byte) IP header within IP headers output from the selector circuit 2202 of the IP packet forming circuit 22B. Likewise, "MHn" indicates an n-th (i.e., at an n-th byte) MPE section header within MPE section headers output from the selector circuit 2402 of the MPE section forming circuit, and "THn" (n is an integer equal to or larger than one) indicates na n-th (i.e., at an n-th byte) TS packet header within TS packet headers output from the selector circuit 2422 of the TS packet forming circuit 242. Further, "TS packet n" (n is an integer equal to or larger than one) indicates an n-th TS packet (i.e., an n-th packet) within TS packets output from the burst forming circuit 244.

Notably, while the embodiment of Fig. 3 implies memory delays in the respective circuits 22B, 240, 242, 244, the length of a duration in which the generation of PRBS is stopped matches the sum of the length of a period in which each circuit 22B, 240, 242, 244 is generating a header and the like, so that the outputs IPOUT, MPEOUT, TSOUT, BOUT of the respective circuits contain PRBS data neither too much nor too less.

Specifically, in a shown T0 duration, the counter outputs CO1 - C03 of the respective circuits have values related to data portions, respectively, and the counter output C04 of the burst forming circuit 244 indicates a duration which has a value related to a TS packet duration (duration shown in Fig. 6B(e)). The next T1 duration indicates a duration in which the value of the counter output CO1 of the IP packet forming circuit 22B is counted up from "0" to "3," i.e., a duration corresponding to the IP header portion. The next T2 duration indicates a duration in which the value of the counter output CO2 of the MPE section forming circuit is counted up from "0" to "2," i.e., a duration corresponding to the MPE section header portion. Further, a T3 duration is a duration, like the T0 duration, in which all the counter outputs CO1 - CO3 have values corresponding to respective data portions, and the counter output CO4 of the burst forming circuit 244 has a value corresponding to the TS packet duration. Further, a T4 duration indicates a duration in which the counter output CO3 of the TS packet forming circuit 242 is counted up from "0" to "1," i.e., a duration corresponding to the TS packet header. Further, a T5 duration is a duration, like the T0 duration and T3 duration, in which all the counter outputs CO1 - CO3 indicate values corresponding to data portions, and the counter output C04 of the burst forming circuit 244 has a value corresponding to the TS packet duration. Further, a T6 duration is a duration in which the counter output CO4 of the burst forming circuit 244 is "3" or more, i.e., a duration subsequent to the TS packet duration within a PRBS burst duration, and a duration which has a value corresponding to an additional burst duration.

Specifically, since the T1 duration is a duration corresponding to the IP header portion, the enable signal EN1 is low. In this event, since the enable signal EN-M1 input to the memory 224 is also low, input/output of the memory is stopped. In the meantime, the IP packet headers "IH1" to "IH4" are sequentially output to the output of the IP packet forming circuit. During this T1 duration, in the PRBS generator 20B, the enable signal EN0 is low, the generation of the Pseudo Random Binary bit Sequence is also stopped, and the output of PRBS holds the preceding output "P8."

Since the T2 duration is a duration corresponding to the MPE section header portion, the enable signal EN2 is low. In this way, since the enable signal EN-M2 input to the memory 2406 is also low, input/output of the memory is stopped. In this event, the MPE section headers "MH1" to "MH3" are sequentially output to the output of the MPE section. During this T2 duration, in the IP packet forming circuit 22B, the enable signal EN-C1 input to the counter 226 is also low in response to the enable signal EN2 being low, so that the counter output CO1 is not counted up but holds the preceding value "3" as it is. Also, for this reason, the enable signal EN1 remains low, so that the IP packet output also holds the same "IH4" as the preceding one. Further, during this T2 duration, in the PRBS generator 20B, since the enable signal EN0 is low, the generation of the Pseudo Random Binary bit Sequence is stopped, and the PRBS output holds the preceding output "P8."

Since the T4 duration is a duration corresponding to the TS packet header, the enable signal EN3 is low. In this way, since the enable signal EN-M3 input to the memory 2426 is also low, input/output of the memory is stopped. In the meantime, the TS packet headers "TH1" - "TH2" are sequentially output to the output of the TS packet forming circuit. Also, in the MPE section forming circuit and IP packet forming circuit 22B, the enable signals EN-M1 and EN-M2 input to the memories 224 and 2406 are low, respectively, in response to the enable signal EN3 being low, so that input/output of the respective memories are stopped. Likewise, during this T4 duration, in the first PRBS generator 20B, the enable signal EN0 is low, the generation of the Pseudo Random Binary bit Sequence is also stopped, and the output of PRBS holds the preceding output "P9."

Since the T0 duration, T3 duration, and T5 duration corresponds to the data portions of the IP packet, MPE section, and TS packet, respectively, and also correspond to the TS packet duration in the burst formation, the enable signals EN1 - EN4 are all high. In this event, each of the circuits 22B, 240, 242, and 244 performs count-up and memory input/output. Also, in these durations in which the enable signal E0 is high, the PRBS generator 20B generates the Pseudo Random Binary bit Sequence to sequentially generate PRBS's from a code next to the preceding code.

Next, referring also to Fig. 6B, a description will be given of timings related to the creation of the burst type TS frame in the burst forming circuit 244. Here, Fig. 6B(e) shows signals and the like related to the burst forming circuit 244 and a timing relationship with signals in Fig. 6A in (d), so that the signals of the TS packet forming circuit shown in Fig. 6A(d) are also shown in (d). It should be noted that the burst forming circuit 244 described in Fig. 6B counts in units of TS packet lengths (188 bytes), and the enable signal EN4 is also input to EN0 of the Pseudo Random Binary bit Sequence generator 20B, like EN1 - EN3 in Fig. 6A, i.e., during the T6 duration in which the enable signal EN4 is low, EN0 of the Pseudo Random Binary bit Sequence generator 20B is also low, and the PRBS output holds the preceding PRBS code.

Specifically, in the TS packet duration (in which the counter output C04 is "0" - "2") within the PRBS burst duration in which PRBS is inserted, "TS packet 1" - "TS packet 3" are output. Next, the T6 duration, as shown, includes the remaining duration of the PRBS burst duration except for the TS packet duration, and an additional burst duration subsequent thereto, within the burst duration. In this event, a "PSI/SI packet" is output in the remaining duration (in which the counter output CO4 is "3") of the PRBS burst duration, and the Null packet is output in the additional burst duration (i.e., the counter output C04 is "4" - "N"). Here, N is equal to the number of packets in one burst duration. During the T6 duration in which the enable signal EN4 is low and the enable signal EN0 is low, the PRBS generator 20B stops the generation of the Pseudo Random Binary bit Sequence, and holds the preceding PRBS output. As previously described, the circuit of Fig. 3, as an overall operation, can generates a burst type TS frame output BOUT which contains PRBS's in its data portion. Referring next to Fig. 7, a detailed description will be given of the bit error rate (BER) detector 4 shown in Fig. 1. In Fig. 7, elements corresponding to those in Fig. 1 are designated the same reference numerals with a symbol "B" appended thereto. As shown, the bit error rate detector 4B comprises an IP packet detector 40B, a reference IP packet generator 42B, and an IP packet comparator 44B. Further, the IP packet 40B comprises a synchronization detector 400, an MPE section extraction circuit 402, and an IP packet extraction circuit 404. The reference IP packet generator 42B comprises a second PRBS generator circuit 4200, a second Pseudo Random Binary bit Sequence generator 420B including a PRBS synchronization circuit 4202, and a second IP packet forming circuit 422B. The IP packet comparator 44B comprises a packet comparator 440 and an error counter 442.

Specifically, when a received output from the tuner 1 is in the MPEG-2 TS frame form, the synchronization detector 400 which receives the received output from the tuner 1 detects a particular PID contained in a TS packet header which forms part of a MPEG-2 TS frame, and outputs a TS packet including the particular PID, when it detects this particular PID. Next, the MPE section extraction circuit 402 which receives the output of the synchronization detector 400 divides or couples a TS packet payload portion resulting from a removal of the TS packet header from the received TS packet to extract a MPE section, and outputs this MPE section. Next, the IP packet extraction circuit which receives the output of the MPE section extraction circuit 402 removes an MPE section header from the received MPE section, extracts an IP packet, and supplies to the PRBS synchronization circuit 4202 and packet comparator 440 as a received IP packet.

Notably, when a received output from the tuner 1 is in an IP packet form, the received output from the tuner can be supplied as it is to th the PRBS synchronization circuit 4202 and packet comparator 440 as a received IP packet without performing the synchronization detection, MPE section extraction, or IP packet extraction.

The second Pseudo Random Binary bit Sequence generator 420B which receives the received IP packet generates PRBS in the same data generation sequence as PRBS generated by the test signal generator 2B by means of the second PRBS generator circuit 4200. The PRBS synchronization circuit 4202 which receives the PRBS generated by the second PRBS generator 4200 comprises circuits including a shift register and a decoder, and synchronizes the received PRBS to the received IP packet from the IP packet extraction circuit 404. Specifically, the second Pseudo Random Binary bit Sequence generator 420B forces the PRBS generator circuit 4200 to generate a certain number of bits of PRBS's which are then placed in the shift register, stops the operation of the PRBS generator circuit 4200, sequentially compares the bit sequences placed in the shift register with incoming received IP packets, and resumes the operation of the PRBS generator circuit 4200 when a matching portion is detected in both over a certain number of bits, thereby generating PRBS in synchronism with PRBS within the received IP packet. The second Pseudo Random Binary bit Sequence generator 420B which perform such operations is well known in the art, so that those skilled in the art should be able to configure an arbitrary known circuit. The second IP packet forming circuit 422B which receives the thus generated PRBS forms the PRBS into an IP packet form to generate a reference IP which is supplied to the packet comparator 440.

Next, the packet comparator 440 which receives the received IP packet and reference IP packet comprises circuits which includes a shift register and a decoder, compares these IP packets bit by bit, and generates a bit error signal at its output each time a discrepancy is detected. The error counter 442 has an input connected to the output of the packet comparator 440, and therefore counts the number of bit error signals supplied from the comparator. The count result is supplied to a CPU (not shown) of the bit error rate (BER) measuring apparatus A. This CPU calculates a bit error rate in certain units based on the count result. In this way, the bit error rate (BER) detector 44B can measure the bit error rate of a DVB-H broadcasting tuner of the received IP packet.

While the technical idea according to the present invention has been described in detail with reference to particular embodiments, it should be apparent to those skilled in the art to which the present invention belongs that a variety of modifications and alterations can be made without departing from the spirit and scope of the claims. The foregoing description has been made for purposes of illustration, and is not intended to be exhaustive or limit the invention to the exact form disclosed above. Variations and modifications can be made and are included in the scope of the foregoing embodiments defined by the appended claims.

## Claims

1. A test signal generator (2) comprising a Pseudo Random Binary bit Sequence generator (20) for generating a Pseudo Random Binary bit Sequence in a burst form while holding the continuity of the code.

2. A test signal generator (2) according to claim 1, **characterized in that:**
said Pseudo Random Binary bit Sequence generator responds to an operation control signal in order to intermittently operate in the burst form.

3. A test signal generator (2) according to claim 2, **characterized in that:**
said Pseudo Random Binary bit Sequence generator (20) generates Pseudo Random Binary bit Sequence in a certain sequence, generates a string of Pseudo Random Binary bit Sequence in the sequence during a duration of the burst,
wherein the first code of the Pseudo Random Binary bit String generated in the burst duration is a code subsequent to the last code of a Pseudo Random Binary bit String generated during the preceding burst duration.

4. A test signal generator (2) according to claim 1, **characterized by** further comprising:
an IP packet forming circuit (22) for receiving the Pseudo Random Binary bit String of said Pseudo Random Binary bit Sequence generator (20) to generate an Internet Protocol (IP) packet; and
a TS frame forming circuit (24) for receiving the IP packet from said IP packet forming circuit to generate a transport stream (TS frame).

5. A test signal generator (2) according to claim 4, **characterized in that:**
said IP packet forming circuit (22) generates a plurality of IP packets from the Pseudo Random Binary bit String from said Pseudo Random Binary bit Sequence generator (20), and
each of the plurality of IP packets includes an associated one of a plurality of string portions divided from the Pseudo Random Binary bit String.

6. A test signal generator (2) according to claim 4, **characterized in that:**
said TS frame forming circuit (24, 24B) comprises:
an MPE section forming circuit (240) for adding burst period information to the IP packet from said IP packet forming circuit (22) to generate a multi-protocol encapsulation (MPE) section;
a TS packet forming circuit (242) for generating at least one TS packet from at least one of the MPE sections, each of the at least one TS packet includes an associated one of a plurality of divided section portions of the at least one MPE section, and a TS header, said header including a TS packet identifier; and
a burst forming circuit (244) for generating a TS frame from the TS packet, one said TS frame including at least one TS packet from said TS packet forming circuit (242) in one burst duration.

7. A test signal generator (2) according to claim 6, **characterized in that:**
said one TS frame includes an additional burst duration other than the one burst duration,
said one TS frame includes at least one additional TS packet having a TS packet identifier different from the TS packet identifier; and
said additional TS packet is included in the one additional burst duration.

8. A test signal generator (2, 2B) according to claim 7, **characterized in that:**
said Pseudo Random Binary bit Sequence generator (20, 20B) operates in response to signals from said IP packet forming circuit (22, 22B0 and said TS frame forming circuit (24, 24B).

9. A test signal generator (2, 2B) according to claim 6, **characterized in that:**
each of said IP packet forming circuit (22, 22B), said MPE section forming circuit (240), and said TS packet forming circuit (242) comprises a control signal generator circuit (2200, 2400, 2420) associated therewith, wherein said each control signal generator circuit generates the operation control signal indicative of an enabled state in a duration in which said associated circuit does not generates a header to be added, and the operation control signal indicative of a disabled state in the remaining duration.

10. A test signal generator (2B) according to claim 6, **characterized in that:**
said burst forming circuit (244) comprises a control signal generator circuit (2440), said control signal generator circuit generating the operation control signal indicative of an enabled state in a duration in which said burst forming circuit does not generate the additional TS packet to be added, and the operation control signal indicative of a disabled state in the remaining duration.

11. A test signal generator (2B) according to claim 10, **characterized in that:**
said Pseudo Random Binary bit Sequence generator (20) generates the Pseudo Random Binary bit Sequence string when all the operation control signals indicate the enabled state of said Pseudo Random Binary bit Sequence generator (20), and
said Pseudo Random Binary bit Sequence generator (20) stops operating when any of the operation control signals indicates the disabled state of said Pseudo Random Binary bit Sequence generator (20).

12. A test signal generator (2) according to claim 1, **characterized by** further comprising:
a processing circuit (26) for performing modulation and/or noise addition on the TS frame.

13. A bit error rate measuring apparatus for measuring a bit error rate of a tuner (1), comprising:
a Pseudo Random Binary bit Sequence generator (20) for generating a Pseudo Random Binary bit Sequence in a burst form while holding the continuity of the code.

14. A bit error rate measuring apparatus (A) according to claim 13, **characterized by** comprising:
said test signal generator (2) for generating a test signal including a TS frame, said test signal being supplied to said tuner (1) under measurement; and
a bit error rate detector (4) for detecting a bit error rate from a received test signal, said received test signal being generated by said tuner (1) in response to the test signal from said test signal generator.

15. A bit error rate measuring apparatus (A) according to claim 14, **characterized in that:**
said bit error rate detector (4) comprises:
an IP packet extractor (40) for extracting a received IP packet from the received test signal;
a reference IP packet generator (42) for generating a reference IP packet; and
an error detector (44) for comparing the received IP packet with the reference IP packet to detect an error.

16. A bit error rate measuring apparatus (A, 4B) according to claim 15, **characterized in that:**
said IP packet extractor (40, 40B) comprises:
a synchronization detector (400) for detecting the TS frame received from the received test signal; and
an IP packet extraction circuit (404) for extracting the received IP packet included in the received TS frame.

17. A bit error rate measuring apparatus (A, 4B) according to claim 15, **characterized in that:**
said reference IP packet generator (42, 42B) comprises:
a reference Pseudo Random Binary bit Sequence generator (420B) for generating a Pseudo Random Binary bit String in synchronism with a Pseudo Random Binary bit Sequence included in the received IP packet; and
a reference IP packet forming circuit (422B) for generating a plurality of reference IP packets from the Pseudo Random Binary bit String from said reference Pseudo Random Binary bit Sequence generator, each of the plurality of IP packets including an associated one of a plurality of string portions divided from the reference Pseudo Random Binary bit String.

18. A bit error rate measuring apparatus (A, 4B) according to claim 15, **characterized in that:**
said error detector (44, 44B) comprises:
a comparator (440) for comparing each of the received IP packets with each of the reference IP packets to generate a bit error signal when a bit error is detected; and
an error counter (442) for counting the bit error signal.

19. A test signal generating method **characterized by** generating a test signal by generating a Pseudo Random Binary bit Sequence in the form of burst while holding the continuity of the code.

20. A test signal generating method according to claim 19, **characterized in that:**
generating the Pseudo Random Binary bit Sequence includes responding to an operation control signal for intermittently operating in the burst form.

21. A test signal generating method according to claim 20, **characterized by** including:
generating a string of Pseudo Random Binary bit Sequence in a sequence in which the Pseudo Random Binary bit Sequence are generated during the burst duration,
wherein the first code of the Pseudo Random Binary bit String generated in the burst duration is a code subsequent to the last code of a Pseudo Random Binary bit String generated during the preceding burst duration.

22. A test signal generating method according to claim 20, **characterized in that:**
generating the test signal further comprises:
receiving the Pseudo Random Binary bit String to generate an IP packet; and
receiving the IP packet to generate an TS frame.

23. A bit error rate measuring method for measuring a bit error rate of a tuner (1), said method comprising the test signal generating method according to claim 19.

24. A bit error rate measuring method according to claim 23, wherein said test signal generating method generates a test signal including a TS frame, said test signal being supplied to said tuner (1) under measurement, **characterized in that:**
said measuring method includes detecting a bit error rate from a received test signal, and
said received test signal is generated by said tuner in response to the test signal from said test signal generator.

## Amended claims

### Amended claims under Art. 19.1 PCT

**1.** (Amended) A test signal generator (2) comprising a Pseudo Random Binary bit Sequence generator (20) for generating a Pseudo Random Binary bit Sequence in a burst form while holding the continuity of the code, **characterized in that**:
said Pseudo Random Binary bit Sequence generator responds to an operation control signal for intermittently operating in the burst form.

**2.** (Canceled)

**3.** (Amended) A test signal generator (2) according to claim 1, **characterized in that:**
said Pseudo Random Binary bit Sequence generator (20) generates Pseudo Random Binary bit Sequence in a certain sequence, generates a string of Pseudo Random Binary bit Sequence in the sequence during a duration of the burst,
wherein the first code of the Pseudo Random Binary bit String generated in the burst duration is a code subsequent to the last code of a Pseudo Random Binary bit String generated during the preceding burst duration.

**4.** (Amended) A test signal generator (2), **characterized by** comprising:
a Pseudo Random Binary bit Sequence generator(20) for generating a Pseudo Random Binary bit Sequence in the form of burst while holding the continuity of the code;
an IP packet forming circuit (22) for receiving the Pseudo Random Binary bit String of said Pseudo Random Binary bit Sequence generator (20) to generate an Internet Protocol (IP) packet; and
a TS frame forming circuit (24) for receiving the IP packet from said IP packet forming circuit to generate a transport stream (TS frame).

**5.** A test signal generator (2) according to claim 4, **characterized in that:**
said IP packet forming circuit (22) generates a plurality of IP packets from the Pseudo Random Binary bit String from said Pseudo Random Binary bit Sequence generator (20), and
each of the plurality of IP packets includes an associated one of a plurality of string portions divided from the Pseudo Random Binary bit String.

**6.** A test signal generator (2) according to claim 4, **characterized in that:**
said TS frame forming circuit (24, 24B) comprises:
an MPE section forming circuit (240) for adding burst period information to the IP packet from said IP packet forming circuit (22) to generate a multi-protocol encapsulation (MPE) section;
a TS packet forming circuit (242) for generating at least one TS packet from at least one of the MPE sections, each of the at least one TS packet includes an associated one of a plurality of divided section portions of the at least one MPE section, and a TS header, said header including a TS packet identifier; and
a burst forming circuit (244) for generating a TS frame from the TS packet, one said TS frame including at least one TS packet from said TS packet forming circuit (242) in one burst duration.

**7.** A test signal generator (2) according to claim 6, **characterized in that:**
said one TS frame includes an additional burst duration other than the one burst duration,
said one TS frame includes at least one additional TS packet having a TS packet identifier different from the TS packet identifier; and
said additional TS packet is included in the one additional burst duration.

**8.** A test signal generator (2, 2B) according to claim 7, **characterized in that:**
said Pseudo Random Binary bit Sequence generator (20, 20B) operates in response to signals from said IP packet forming circuit (22, 22B0 and said TS frame forming circuit (24, 24B).

**9.** A test signal generator (2, 2B) according to claim 6, **characterized in that:**
each of said IP packet forming circuit (22, 22B), said MPE section forming circuit (240), and said TS packet forming circuit (242) comprises a control signal generator circuit (2200, 2400, 2420) associated therewith, wherein said each control signal generator circuit generates the operation control signal indicative of an enabled state in a duration in which said associated circuit does not generates a header to be added, and the operation control signal indicative of a disabled state in the remaining duration.

**10.** A test signal generator (2B) according to claim 6, **characterized in that:**
said burst forming circuit (244) comprises a control signal generator circuit (2440), said control signal generator circuit generating the operation control signal indicative of an enabled state in a duration in which said burst forming circuit does not generate the additional TS packet to be added, and the operation control signal indicative of a disabled state in the remaining duration.

**11.** A test signal generator (2B) according to claim 10, **characterized in that:**
said Pseudo Random Binary bit Sequence generator (20) generates the Pseudo Random Binary bit String when all the operation control signals indicate the enabled state of said Pseudo Random Binary bit Sequence generator (20), and
said Pseudo Random Binary bit Sequence generator (20) stops operating when any of the operation control signals indicates the disabled state of said Pseudo Random Binary bit Sequence generator (20).

**12.** (Amended) A test signal generator (2) according to claim 4, **characterized by** further comprising:
a processing circuit (26) for performing modulation and/or noise addition on the TS frame.

**13.** (Amended) A bit error measuring apparatus for measuring a bit error rate of a tuner (1), comprising a Pseudo Random Binary bit Sequence,generator (20) for generating a Pseudo Random Binary bit Sequence in a burst form while holding the continuity of the code, **characterized by** comprising:
said test signal generator (2) for generating a test signal including a TS frame, said test signal being supplied to said tuner (1) under measurement; and
a bit error rate detector (4) for detecting a bit error rate from a received test signal, said received test signal being generated by said tuner (1) in response to the test signal from said test signal generator.

**14.** (Canceled)

**15.** (Amended) A bit error rate measuring apparatus (A) according to claim 13, **characterized in that:**
said bit error rate detector (4) comprises:
an IP packet extractor (40) for extracting a received IP packet from the received test signal;
a reference IP packet generator (42) for generating a reference IP packet; and
an error detector (44) for comparing the received IP packet with the reference IP packet to detect an error.

**16.** A bit error rate measuring apparatus (A, 4B) according to claim 15, **characterized in that:**
said IP packet extractor (40, 40B) comprises:
a synchronization detector (400) for detecting the TS frame received from the received test signal; and
an IP packet extraction circuit (404) for extracting the received IP packet included in the received TS frame.

**17.** A bit error rate measuring apparatus (A, 4B) according to claim 15, **characterized in that:**
said reference IP packet generator (42, 42B) comprises:
a reference Pseudo Random Binary bit Sequence generator (420B) for generating a Pseudo Random Binary bit String in synchronism with a Pseudo Random Binary bit Sequence included in the received IP packet; and
a reference IP packet forming circuit (422B) for generating a plurality of reference IP packets from the Pseudo Random Binary bit String from said reference Pseudo Random Binary bit Sequence generator, each of the plurality of IP packets including an associated one of a plurality of string portions divided from the reference Pseudo Random Binary bit String.

**18.** A bit error rate measuring apparatus (A, 4B) according to claim 15, **characterized in that:**
said error detector (44, 44B) comprises:
a comparator (440) for comparing each of the received IP packets with each of the reference IP packets to generate a bit error signal when a bit error is detected; and
an error counter (442) for counting the bit error signal.

**19.** (Amended) A test signal generating method
**characterized by** generating a test signal by generating a Pseudo Random Binary bit Sequence in the form of burst while holding the continuity of the code, **characterized in that:**
generating the Pseudo Random Binary bit Sequence includes responding to an operation control signal for intermittently operating in the burst form.

**20.** (Canceled)

**21.** (Amended) A test signal generating method according to claim 19, **characterized by** including:
generating a string of Pseudo Random Binary bit Sequence in a sequence in which the Pseudo Random Binary bit Sequence are generated during the burst duration,
wherein the first code of the Pseudo Random Binary bit String generated in the burst duration is a code subsequent to the last code of a Pseudo Random Binary bit String generated during the preceding burst duration.

**22.** (Amended) A test signal generating method according to claim 19, **characterized in that:**
generating the test signal further comprises:
receiving the Pseudo Random Binary bit String to generate an IP packet; and
receiving the IP packet to generate a TS frame.

**23.** (Amended) A bit error rate measuring method for measuring a bit error rate of a tuner (1), said method including a test signal generating method for generating a test signal by generating a Pseudo Random Binary bit Sequence in the form of burst while holding the continuity of the code

**24.** A bit error rate measuring method according to claim 23, wherein said test signal generating method generates a test signal including a TS frame, said test signal being supplied to said tuner (1) under measurement, **characterized in that:**
said measuring method includes detecting a bit error rate from a received test signal, and
said received test signal is generated by said tuner in response to the test signal from said test signal generator.
